# EUROPEAN PATENT APPLICATION

(11) **EP 3 521 630 A1**
(43) Date of publication of application: **07.08.2019**
(21) Application number: 18199705.7
(22) Date of filing: 10.10.2018
(51) Int. Cl.: F04D 25/06

(54) **FAN WITH A TEMPERATURE DETECTING FUNCTION**

(30) Priority: 31.01.2018 TW 107103489
(71) Applicant: Sunonwealth Electric Machine Industry Co., Ltd., Kaohsiung City / Taiwan, R.O.C. (TW)
(72) Inventor: Horng, Alex, Kaohsiung City, Taiwan, R.O.C. (TW); WEI, Hsiu-Ju, Kaohsiung City, Taiwan, R.O.C. (TW)
(74) Representative: Louis Pöhlau Lohrentz

(57) **Abstract**

A fan with a temperature detecting function includes a fan frame (1), an impeller (2) and a circuit board (3). The fan frame (1) includes an air-guiding room (11), an air inlet (12) and an air outlet (13). The air inlet (12) and the air outlet (13) intercommunicate with the air-guiding room (11). The impeller (2) is rotatably mounted in the air-guiding room (11). The circuit board (3) is mounted to the fan frame (1) and includes a temperature sensor (31) extending into the air-guiding room (11) and below an inner face (1a2) of the fan frame (1).

## Description

### BACKGROUND OF THE INVENTION

### 1. Field of the Invention

The present invention generally relates to a fan and, more particularly, to a fan including a temperature sensor.

### 2. Description of the Related Art

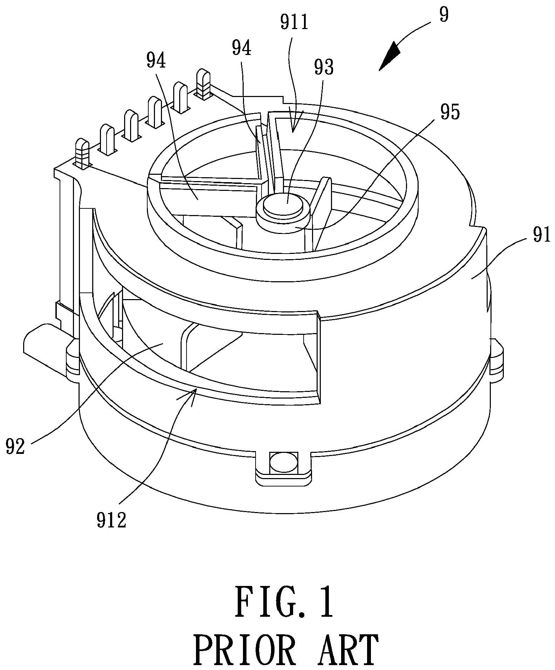

A conventional fan equipped with a temperature sensor is generally used, for example, in an air-conditioning system of a vehicle. The temperature inside the vehicle can be effectively detected and accordingly regulated. FIG. 1 shows a conventional fan 9 equipped with a temperature sensor. The fan 9 includes a fan frame 91 having an air inlet 911 and an air outlet 912. An impeller 92 is disposed between the air inlet 911 and the air outlet 912 and is driven to rotate by a stator. A temperature sensor 93 is disposed at the air inlet 911 of the fan frame 91. A plurality of wire-supporting portions 94 extends from the portion of an inner periphery of the fan frame 91 adjacent to the air inlet 911. Each wire-supporting portion 94 has an end connected to a flat support 95 that is configured to support the temperature sensor 93. An example of such a fan 9 is seen in U.S. Patent No. 8,251,655 entitled "Fan and Frame with Sensor-supporting Structure Thereof" (Taiwan Patent No. 1413492).

The temperature sensor 93 can be fixed in place and supported by the wire-supporting portions 94 and the flat support 95. However, since the temperature sensor 93, the wire-supporting portions 94 and the flat support 95 are disposed at the air inlet 911 of the fan frame 91, the air flowing into the air inlet 911 is partially blocked by the flat support 95. As a result, the amount of air flowing through the air outlet 912 and the air pressure at the air outlet 912 are unstable, making the air unable to smoothly flow into the air inlet 911 and out of the air outlet 912. Disadvantageously, the flow of air is not smooth and the noise is generated.

In light of this, it is necessary to improve the conventional fan.

### SUMMARY OF THE INVENTION

It is therefore the objective of this invention to provide a fan with a temperature detecting function which ensures that the temperature sensor will not hinder the air from flowing into the air inlet and out of the air outlet. As a result, the air is able to smoothly flow into the air inlet and out of the air outlet.

A fan with a temperature detecting function includes a fan frame, an impeller and a circuit board. The fan frame includes an air-guiding room, an air inlet and an air outlet. The air inlet and the air outlet intercommunicate with the air-guiding room. The impeller is rotatably mounted in the air-guiding room. The circuit board is mounted to the fan frame and includes a temperature sensor extending into the air-guiding room and below an inner face of the fan frame.

Based on the above, in the fan having the temperature detecting function according to the invention, the location of the temperature sensor is changed in a manner where the temperature sensor is disposed in the air-guiding room and below the inner face of the fan frame. In this arrangement, the temperature sensor is not located right at the air inlet and the air outlet and therefore will not hinder the air from flowing into the air inlet and out of the air outlet. As a result, the amounts of the air flowing through the air inlet and the air outlet and the air pressures of the air inlet and the outlet are stable, thereby ensuring that the air is able to smoothly flow through the air inlet and the air outlet and avoiding the noise from forming due to the unstable flow of air.

In a possible example, the fan further includes a stator assembly and a shaft tube mounted in the fan frame. The stator assembly includes a wound member fit around the shaft tube. The wound member includes a wound portion and a pin portion. The stator assembly further includes a coil unit wound around the wound portion. The coil unit includes a wire connected and fixed to the pin portion. The stator assembly further includes a conductive member coupled with and protruding from the fan frame. The pin portion is electrically connected to the conductive member. The circuit board is coupled with the fan frame and is electrically connected to the conductive member. In this arrangement, the structure is simple and the assembly is convenient, reducing the manufacturing cost and improving the convenience in assembly.

In a possible example, the impeller includes a shaft rotatably coupled with the shaft tube, a hub coupled with the shaft, and a magnet mounted to an inner periphery of the hub. The stator assembly further includes a balancing plate coupled with the wound member and facing the magnet. In this arrangement, the balancing plate can be fixed to the wound member in a predetermined manner.

In a possible example, the fan frame includes a first frame portion and a second frame portion coupled with the first frame portion. The air inlet and the air outlet are located on the first frame portion. The shaft tube is mounted in the second frame portion. The conductive member is coupled with the first frame portion and the second frame portion and protrudes from the first frame portion. The circuit board is coupled with the first frame portion. In this arrangement, the structure is simple and the assembly is convenient, reducing the manufacturing cost and improving the convenience in assembly.

In a possible example, the impeller includes a plurality of blades mounted to an outer periphery of the hub and received in the first frame portion. Thus, the blades and the temperature sensor are received in the first frame portion, improving the detection accuracy of the temperature sensor.

In a possible example, the fan further includes a buffering ring located outside of the first frame portion. Thus, the buffering ring is used to cover and press the circuit board, avoiding the collision of the circuit board while providing the desired decoration and fixation effects.

In a possible example, the circuit board is mounted to and located outside of the fan frame. The fan frame further includes an insertion hole intercommunicating with the air-guiding room, the air inlet and the air outlet. The temperature sensor extends through the insertion hole and into the air-guiding room. In this arrangement, the insertion hole is aligned with the temperature sensor such that the circuit board can be positioned more conveniently.

In a possible example, the temperature sensor is located adjacent to a boundary between the air inlet and the air outlet. Thus, the detection accuracy of the temperature sensor is improved.

In a possible example, the circuit board is received in the fan frame. Thus, it is not required to form the insertion hole, thus reducing the manufacturing cost and improving the convenience in assembly.

In a possible example, the circuit board is in a "C" shape. Thus, the circuit board can be positioned in the fan frame more conveniently.

In a possible example, the temperature sensor is a Surface Mount Device (SMD). Thus, the temperature sensor has a smaller volume to reduce the effect in blocking the flow of air.

In a possible example, the balancing plate has at least one through-hole, and the wound member includes at least one post. The balancing plate is coupled with the wound member by fusing the at least one post following the insertion of the at least one post through the at least one through-hole. In this arrangement, the engagement between the balancing plate and the wound member is reinforced.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 shows a conventional fan with a temperature detecting function.
FIG. 2 is a perspective, exploded view of a fan with a temperature detecting function according to a first embodiment of the invention.
FIG. 3 is an exploded view of an impeller and a stator assembly of the fan with the temperature detecting function according to the first embodiment of the invention.
FIG. 4 is a top view of the fan with the temperature detecting function according to the first embodiment of the invention.
FIG. 5 is a cross sectional view of the fan of the first embodiment taken along line 5-5 in FIG. 4.
FIG. 6 is a cross sectional view of a fan with a temperature detecting function according to a second embodiment of the invention.

In the various figures of the drawings, the same numerals designate the same or similar parts. Furthermore, when the terms "first", "second", "third", "fourth", "inner", "outer", "top", "bottom", "front", "rear" and similar terms are used hereinafter, it should be understood that these terms have reference only to the structure shown in the drawings as it would appear to a person viewing the drawings, and are utilized only to facilitate describing the invention.

### DETAILED DESCRIPTION OF THE INVENTION

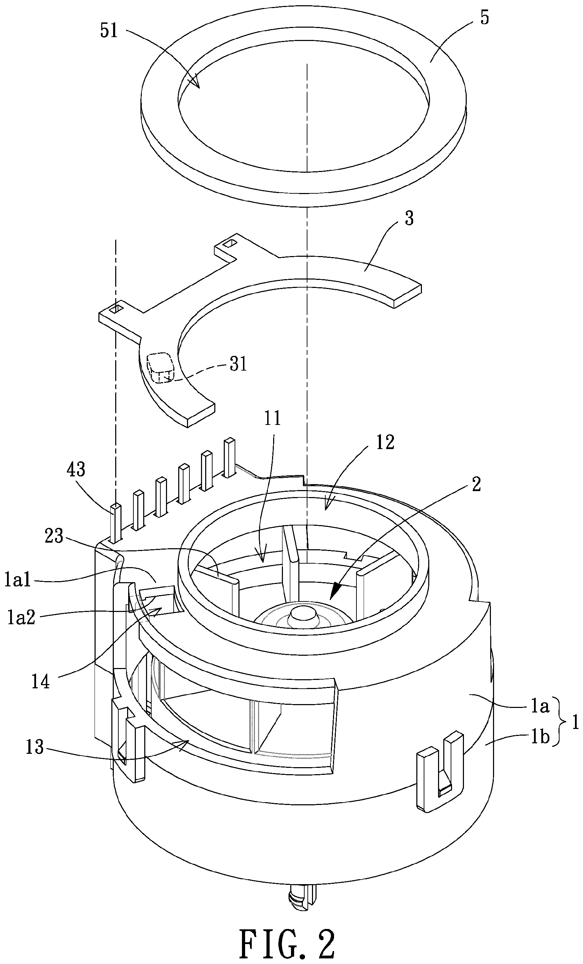

The fan with a temperature detecting function according to the invention can be used in various air-conditioning systems. In the following, the fan is exemplarily used in an air-conditioning system of a vehicle, but is not limited thereto. FIG. 2 shows a fan with a temperature detecting function according to a first embodiment of the invention. The fan includes a fan frame 1, an impeller 2 rotatably mounted in the fan frame 1, and a circuit board 3 mounted to the fan frame 1.

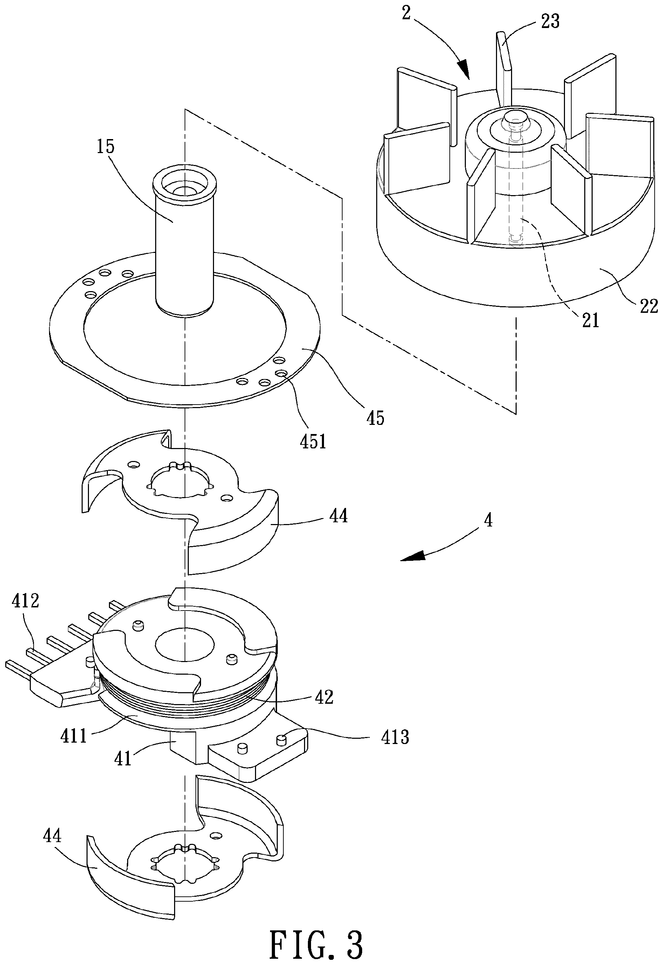

Referring to FIGS. 2 and 3, the fan frame 1 includes an air-guiding room 11, an air inlet 12 and an air outlet 13. The air inlet 12 and the air outlet 13 intercommunicate with the air-guiding room 11. The fan frame 1 includes a first frame portion 1a and a second frame portion 1b that can be combined with each other. The first frame portion 1a has an outer face 1a1 and an inner face 1a2. The air inlet 12 and the air outlet 13 are located on the first frame portion 1a. The fan frame 1 further includes an insertion hole 14 preferably extending from the outer face 1a1 to the inner face 1a2. The insertion hole 14 intercommunicates with the air-guiding room 11, the air inlet 12 and the air outlet 13. Furthermore, a shaft tube 15 can be arranged in the fan frame 1. The shaft tube 15 is preferably mounted in the second frame portion 1b.

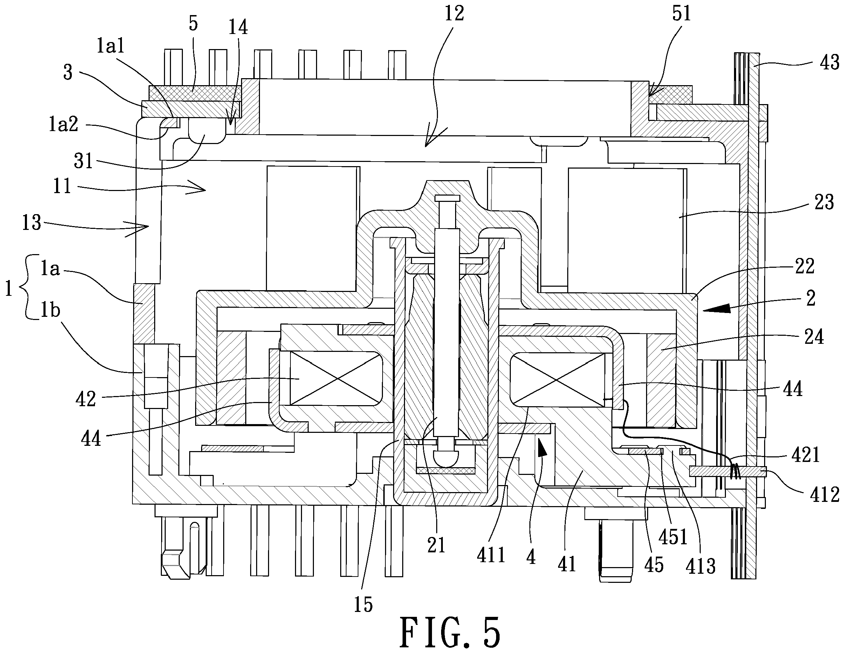

Referring to FIGS. 3 and 5, the impeller 2 is rotatably mounted in the air-guiding room 11. The impeller 2 includes a shaft 21 rotatably coupled with the shaft tube 15, as well as a hub 22 coupled with the shaft 21. The impeller 2 further includes a plurality of blades 23 and a magnet 24. The plurality of blades 23 is mounted to an outer periphery of the hub 22 and is received in the first frame portion 1a. The magnet 24 is mounted to an inner periphery of the hub 22.

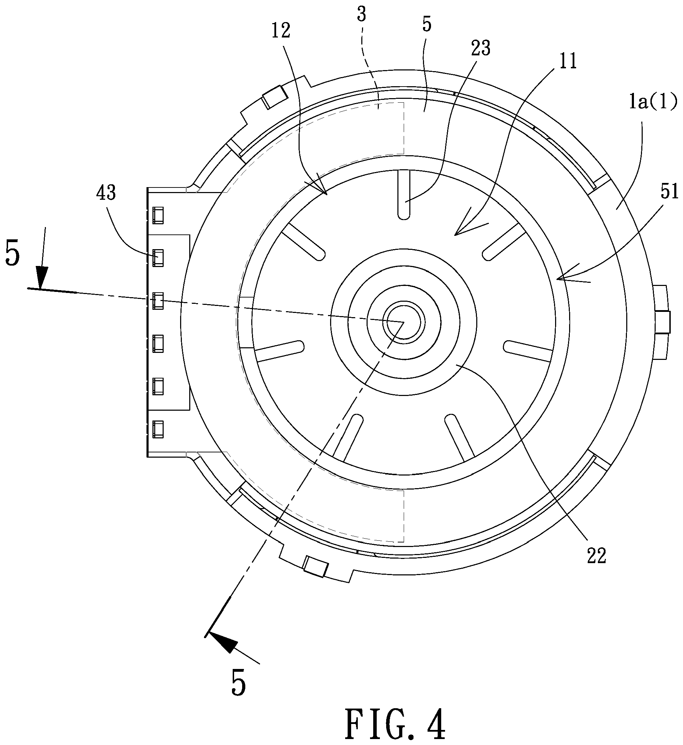

Referring to FIGS. 2, 3, 4 and 5, the circuit board 3 is attached to the fan frame 1 by ways of screwing, engagement, adhesion or welding to achieve a reliable coupling effect between the circuit board 3 and the fan frame 1. The circuit board 3 is preferably in a "C" shape such that it can be attached to the fan frame 1 in an easy way. The circuit board 3 includes a temperature sensor 31 extending into the air-guiding room 11 and below the inner face 1a2. It is noted that the temperature sensor 31 is preferably a surface mount device (SMD) to reduce the volume of the temperature sensor 31. Therefore, the temperature sensor 31 will not severely block the flow of the air.

Specifically, the temperature sensor 31 extends through the insertion hole 14 and into the air-guiding room 11 while the circuit board 3 is coupled with the first frame portion 1a of the fan frame 1. In this manner, the insertion hole 14 can be aligned with the temperature sensor 31 such that the circuit board 3 can be positioned more easily.

Besides, the temperature sensor 31 is preferably located adjacent to the boundary between the air inlet 12 and the air outlet 13. The temperature sensor 31 has a bottom face relatively distant to the circuit board 3 and preferably not flush with the top of the impeller 2 to enhance the detection accuracy of the temperature sensor 31. After the circuit board 3 receives the detected result of the temperature sensor 31, the detected result can be sent to an in-vehicle computer. Accordingly, the in-vehicle computer can regulate the internal temperature of the vehicle based on the detected result.

Referring to FIGS. 3 and 5, the fan with the temperature detecting function according to the invention may further include a stator assembly 4. The stator assembly 4 includes a wound member 41 preferably fit around the shaft tube 15. The wound member 41 may include a wound portion 411 and a pin portion 412. A coil unit 42 is wound around the wound portion 411 and includes a wire 421 connected and fixed to the pin portion 412. A conductive member 43 is preferably coupled with the first frame portion 1a and the second frame portion 1b. The conductive member 43 can protrude from the first frame portion 1a. The pin portion 412 is electrically connected to the conductive member 43. The circuit board 3 is preferably coupled with the fan frame 1 and is electrically connected to the conductive member 43. Two magnetic portions 44 are coupled with the top and bottom of the wound member 41, respectively. In this arrangement, the structure is simple, enabling convenient manufacturing and assembly. Advantageously, the manufacturing cost is reduced and the convenience in assemble is improved.

Moreover, the stator assembly 4 may include a balancing plate 45 having at least one through-hole 451. The wound member 41 includes at least one post 413. In this regard, the balancing plate 45 is coupled with the wound member 41 by inserting the at least one post 413 through the at least one through-hole 451. This enables the balancing plate 45 to be fixed to the wound member 41 in a predetermined manner while facing the magnet 24. In addition, the at least one post 413 can be fused to more securely couple the balancing plate 45 with the wound member 41, enhancing the engagement between the wound member 41 and the balancing plate 45.

Referring to FIGS. 2 and 5, the fan with the temperature detecting function according to the invention may further include a buffering ring 5. The buffering ring 5 is preferably coupled with one face of the circuit board 3 facing away from the first frame portion 1a. The buffering ring 5 includes a through-hole 51 intercommunicating with the air inlet 12. The buffering ring 5 is used to cover and press the circuit board 3 in order to hide and protect the circuit board 3. Thus, the collision of the circuit board 3 can be avoided and the circuit board 3 is not damped and accumulated with dust while the desired decoration and fixation effects are provided.

Referring to FIG. 5, based on the above structure, the fan with the temperature detecting function according to the invention can be installed in an air-conditioning system of a vehicle. During the use of the fan, the circuit board 3 is coupled with the fan frame 1 and the temperature sensor 31 is inserted through the insertion hole 14 and into the air-guiding room 11. In this arrangement, the temperature sensor 31 is located at the air inlet 12 and the air outlet 13, such that the temperature sensor 31 will not hinder the air from flowing into the air inlet 12 and out of the air outlet 13. As a result, the air is able to smoothly flow into the air inlet and out of the air outlet 13, avoiding the noise from forming due to the unstable flow of air.

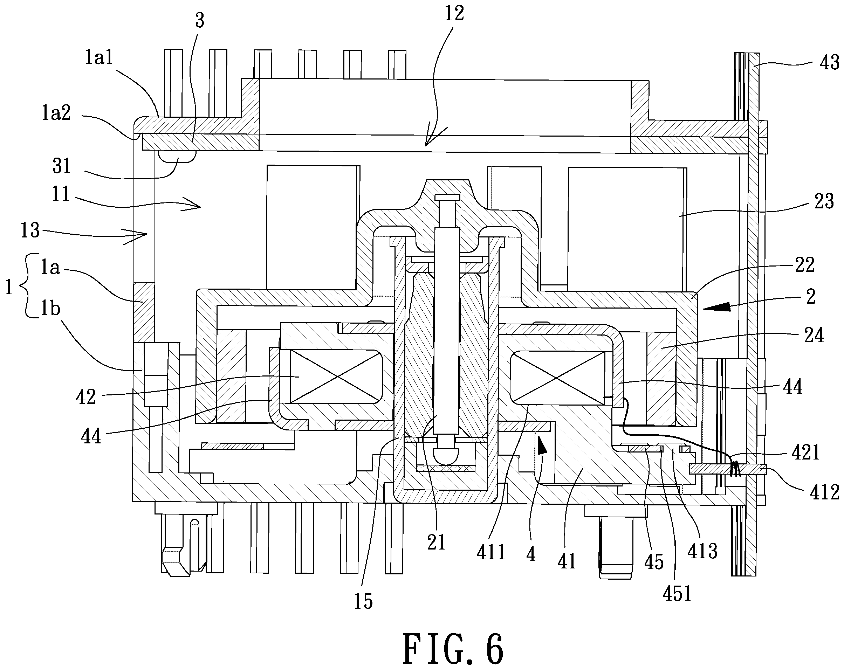

FIG. 6 shows a fan with a temperature detecting function according to a second embodiment of the invention. The second embodiment is substantially the same as the first embodiment except that the fan frame 1 in the second embodiment does not include an insertion hole (as the insertion hole 14 in FIG. 5).

Specifically, the circuit board 3 is mounted in the fan frame 1 such that the temperature sensor 31 does not need to be inserted into the insertion hole 14 as it does in the first embodiment. In this arrangement, the temperature sensor 31 can be disposed in the air-guiding room 11 at the time of manufacturing. Therefore, the fan frame 1 does not need to form the insertion hole 14 at the manufacturing stage, thereby simplifying the structure of the fan frame 1. Moreover, the assembly of the fan does not require the temperature sensor 31 to align with the insertion hole 14, such that the manufacturing cost is reduced and the convenience in assembly is improved.

In conclusion, in the fan having the temperature detecting function according to the invention, the location of the temperature sensor is changed such that the temperature sensor is not located right at the air inlet and the air outlet. Namely, the temperature sensor of the circuit board is disposed into the air-guiding room and below the inner face of the fan frame, such that the temperature sensor is not located right at the air inlet and the air outlet. In this arrangement, the temperature sensor will not hinder the air from flowing into the air inlet and out of the air outlet, ensuring a stable flow of air at the air inlet and the air outlet. As a result, the air is able to smoothly flow into the air inlet and out of the air outlet, avoiding the noise from forming due to the unstable flow of air.

## Claims

1. A fan with a temperature detecting function comprising:
a fan frame (1) including an air-guiding room (11), an air inlet (12) and an air outlet (13), wherein the air inlet (12) and the air outlet (13) intercommunicate with the air-guiding room (11);
an impeller (2) rotatably mounted in the air-guiding room (11); and
a circuit board (3) mounted to the fan frame (1) and including a temperature sensor (31),
wherein the fan is **characterized in that** the temperature sensor (31) extends into the air-guiding room (11) and below an inner face (1a2) of the fan frame (1).

2. The fan with the temperature detecting function as claimed in claim 1, **characterized in** further comprising a stator assembly (4) and a shaft tube (15) mounted in the fan frame (1), wherein the stator assembly (4) includes a wound member (41) fit around the shaft tube (15), wherein the wound member (41) includes a wound portion (411) and a pin portion (412), wherein the stator assembly (4) further includes a coil unit (42) wound around the wound portion (411), wherein the coil unit (42) includes a wire (421) connected and fixed to the pin portion (412), wherein the stator assembly (4) further includes a conductive member (43) coupled with and protruding from the fan frame (1), wherein the pin portion (412) is electrically connected to the conductive member (43), and wherein the circuit board (3) is coupled with the fan frame (1) and is electrically connected to the conductive member (43).

3. The fan with the temperature detecting function as claimed in claim 1 or 2, **characterized in that** the impeller (2) includes a shaft (21) rotatably coupled with the shaft tube (15), a hub (22) coupled with the shaft (21), and a magnet (24) mounted to an inner periphery of the hub (22), wherein the stator assembly (4) further includes a balancing plate (45) coupled with the wound member (41) and facing the magnet (24).

4. The fan with the temperature detecting function as claimed in claim 2, **characterized in that** the fan frame (1) includes a first frame portion (1a) and a second frame portion (1b) coupled with the first frame portion (1a), wherein the air inlet (12) and the air outlet (13) are located on the first frame portion (1a), wherein the shaft tube (15) is mounted in the second frame portion (1b), wherein the conductive member (43) is coupled with the first frame portion (1a) and the second frame portion (1b) and protrudes from the first frame portion (1a), and wherein the circuit board (3) is coupled with the first frame portion (1a).

5. The fan with the temperature detecting function as claimed in claim 2 or 4, **characterized in that** the impeller (2) includes a plurality of blades (23) mounted to an outer periphery of the hub (22) and received in the first frame portion (1a).

6. The fan with the temperature detecting function as claimed in claim 4 or 5, **characterized in** further comprising a buffering ring located outside of the first frame portion (1a).

7. The fan with the temperature detecting function as claimed in any one of claims 1-6, **characterized in that** the circuit board (3) is mounted to and located outside of the fan frame (1), wherein the fan frame (1) further includes an insertion hole (14) intercommunicating with the air-guiding room (11), the air inlet (12) and the air outlet (13), and wherein the temperature sensor (31) extends through the insertion hole (14) and into the air-guiding room (11).

8. The fan with the temperature detecting function as claimed in any one of claims 1-6, **characterized in that** the temperature sensor (31) is located adjacent to a boundary between the air inlet (12) and the air outlet (13).

9. The fan with the temperature detecting function as claimed in any one of claims 1-8, **characterized in that** the circuit board (3) is received in the fan frame (1).

10. The fan with the temperature detecting function as claimed in any one of claims 1-9, **characterized in that** the circuit board (3) is in a "C" shape.

11. The fan with the temperature detecting function as claimed in any one of claims 1-10, **characterized in that** the temperature sensor (31) is a Surface Mount Device (SMD).

12. The fan with the temperature detecting function as claimed in claim 3, **characterized in that** the balancing plate (45) has at least one through-hole (451), wherein the wound member (41) includes at least one post (413), and wherein the balancing plate (45) is coupled with the wound member (41) by fusing the at least one post (413) following the insertion of the at least one post (413) through the at least one through-hole (451).
